# EUROPEAN PATENT APPLICATION

(11) **EP 4 531 003 A1**
(43) Date of publication of application: **02.04.2025**
(21) Application number: 23199826.1
(22) Date of filing: 26.09.2023
(51) Int. Cl.: G06V 20/56, G06V 10/82, G06V 20/58

(54) **METHODS AND SYSTEMS FOR DETERMINING INFORMATION RELATED TO AN ENVIRONMENT OF A VEHICLE**

(71) Applicant: Aptiv Technologies AG, 8200 Schaffhausen (CH)
(72) Inventor: SU, Yu, 42287 Wuppertal (DE); KURIAN, Jittu, 42553 Velbert (DE); LUSZEK, Moritz, 32760 Detmold (DE)
(74) Representative: Manitz Finsterwald Patent- und Rechtsanwaltspartnerschaft mbB

(57) **Abstract**

A computer implemented method for determining information related to an environment of a vehicle comprises the following steps carried out by computer hardware components: determining a point cloud based on measurement data, the point cloud comprising a plurality of points; determining respective features for each point of the point cloud; determining a grid structure based on the point cloud; determining a processed grid structure based on processing the grid structure using an artificial neural network; and determining at least one final grid structure based on the point cloud, the respective features for each point of the point cloud, and the processed grid structure.

## Description

### FIELD

The present disclosure relates to methods and systems for determining information related to an environment of a vehicle.

### BACKGROUND

Automotive perception systems may be required to give different kinds of outputs which may be obtained by different tasks. For example, an object detection task may provide a list of interesting targets, while semantic segmentation may indicate where the driveable space is.

However, obtaining such different kinds of outputs may be cumbersome.

Accordingly, there is a need to provide efficient and accurate methods for obtaining such different kinds of outputs.

### SUMMARY

The present disclosure provides a computer implemented method, a computer system, a vehicle and a non-transitory computer readable medium according to the independent claims. Embodiments are given in the subclaims, the description and the drawings.

In one aspect, the present disclosure is directed at a computer implemented method for determining information related to an environment of a vehicle (for example a car), comprising the following steps performed (in other words: carried out) by computer hardware components: determining a point cloud based on measurement data, the point cloud comprising a plurality of points; determining respective features for each point of the point cloud; determining a grid structure based on the point cloud; determining a processed grid structure based on processing the grid structure using an artificial neural network; and determining at least one final grid structure based on the point cloud, the respective features for each point of the point cloud, and the processed grid structure.

In other words, a neural network architecture may be provided in a method for a multi-task and multi-resolution neural network, for example for use in an automotive perception system.

With the method according to various embodiments, hybrid processing of a grid and points may be provided. For example, point features may be enhanced by concatenating contextual grid features, which may be then converted to a grid of any resolution. Hybrid processing may avoid information loss of gridding in early stage, and waste of computational effort in a sparse high resolution grid. Concatenating may be understood as adding additional information. It will be understood that concatenating of the data may be provided with various data structures.

According to an embodiment, the information related to the environment of the vehicle comprises first kind of information and second kind of information; wherein determining the at least one final grid structure comprises determining a first final grid structure and a second final grid structure; wherein the first kind of information is determined based on the first final grid structure; and wherein the second kind of information is determined based on the second final grid structure. It has been found that using some information for both the first kind of information and the second kind of information, and using some information specific for each of the first kind of information and for the second kind of information provides for efficient and reliable processing.

According to an embodiment, the first final grid structure has a resolution different from a resolution of the second final grid structure. This may allow providing results of different resolutions and/ or for different regions of interest.

According to an embodiment, the first final grid structure has a size different from a size of the second final grid structure. This may allow providing results of different resolutions and/ or for different regions of interest.

According to an embodiment, the first kind of information is different from the second kind of information.

According to an embodiment, the first kind of information comprises at least one of object detection information or semantic segmentation information; and the second kind of information comprises at least one of object detection information or semantic segmentation information.

According to an embodiment, the measurement data comprises at least one of lidar data or radar data. For example, the measurement data may be acquired by a sensor, for example mounted on the vehicle.

According to an embodiment, determining the respective features for each point of the point cloud comprises temporal fusion. For the temporal fusion, points of (time) frame T-1 may firstly be moved to the vehicle coordinate system (VCS) of frame T (which may be referred as ego location compensation), and then fused with points of frame T. At every frame, the number of fused points may be fixed (for example to an integer number N); thus, downsampling of the fused points to the fixed number of points may be provided. The point fusion may then be carried out by concatenating points of frame T-1 and T and then randomly sampling to keep N points. Alternatively, the point fusion may be carried out by concatenating points of frame T-1 and T and then performing a clustering method to get N clusters, wherein every cluster can be considered as a point (for example by taking the cluster center as the point).

According to an embodiment, determining the processed grid structure comprises temporal fusion. For the temporal fusion, in a deep network some layers for sensor information preprocessing may be combined with a recurrent neuronal network. Ego motion compensation of the hidden state may be carried out, allowing the network to locally relate past and current data towards each other and to train the expected output of an occupancy grid, e.g. using lidars. Such an architecture allows to learn the sensor model as well as the best combination method and weighting of data, adapted to the actual situation. For example, an LSTM (long short-term memory) network may be used, or any other recurrent neural network may be used.

According to an embodiment, determining the at least one final grid structure comprises using a deformable attention for point-to-grid conversion. For example, every grid cell may be linked to a fixed number of points and cell features may be calculated by determining a weighted sum of point features. The weights may be decided by deformable attention. Deformable attention as such is widely used, as for example described in "Vision Transformer with Deformable Attention", Zhuofan Xia et al., 2022, arXiv:2201.00520.

According to an embodiment, determining the at least one final grid structure comprises supplementing the respective features for each point of the point cloud with features from the processed grid structure and determining the at least one final grid structure based on the respective supplemented features. Supplementing may be understood as adding additional information. It will be understood that supplementation of the data may be provided with various data structures.

In another aspect, the present disclosure is directed at a computer system, said computer system comprising a plurality of computer hardware components configured to carry out several or all steps of the computer implemented method described herein.

The computer system may comprise a plurality of computer hardware components (for example a processor, for example processing unit or processing network, at least one memory, for example memory unit or memory network, and at least one non-transitory data storage). It will be understood that further computer hardware components may be provided and used for carrying out steps of the computer implemented method in the computer system. The non-transitory data storage and/or the memory unit may comprise a computer program for instructing the computer to perform several or all steps or aspects of the computer implemented method described herein, for example using the processing unit and the at least one memory unit.

In another aspect, the present disclosure is directed at a vehicle comprising the computer system as described herein.

According to an embodiment, the vehicle of claim further comprises at least one sensor configured to acquire the measurement data (alternatively, in an example, the at least one sensor may be included in the computer system comprised in the vehicle).

In another aspect, the present disclosure is directed at a non-transitory computer readable medium comprising instructions which, when executed by a computer system, cause the computer system to carry out several or all steps or aspects of the computer implemented method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM), such as a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the computer implemented method described herein.

### DRAWINGS

Exemplary embodiments and functions of the present disclosure are described herein in conjunction with the following drawings, showing schematically:
- Fig. 1: an illustration with a network architecture with task specific resolutions according to various embodiments;
- Fig. 2A and Fig. 2B: illustrations of a network architecture with range specific resolutions according to various embodiments;
- Fig. 3: an illustration of a network architecture with flexible resolutions according to various embodiments;
- Fig. 4: a flow diagram illustrating a method for determining information related to an environment of a vehicle according to various embodiments; and
- Fig. 5: a computer system with a plurality of computer hardware components configured to carry out steps of a computer implemented method for determining information related to an environment of a vehicle according to various embodiments.

### DETAILED DESCRIPTION

Automotive perception systems may be required to give different kinds of outputs which may be obtained by different tasks. For example, an object detection task may provide a list of interesting targets, while semantic segmentation may indicate where the driveable space is. To accomplish this goal, a common approach is to design a separated network for each task. However, this strategy has several disadvantages. For example, since the multiple tasks may be related, some lowlevel feature may be shared across them. Furthermore, computing features from raw data separately may lead to waste of computational resources. Also, different tasks may be complementary. For example, complementary supervisions may be provided by different tasks. Training them separately may not be able to make use of the complementary supervision information.

Multiple tasks may require different spatial resolution. For example, object detection which outputs bounding boxes of objects may require lower resolution than semantic segmentation which outputs the accurate boundary of objects and road. Besides, for LiDAR and Radar, which are commonly used sensors in automotive perception, the spatial resolution may be range dependent. For example, sensor data in near range may have a higher resolution than sensor data in far range (which may have lower resolution).

According to various embodiments, a unified multi-task and/ or multi-resolution neural network architecture is provided. The architecture according to various embodiments may have a common feature extraction part which is shared by multi-tasks and therefore may save computational cost. Furthermore, the architecture according to various embodiments may be flexible to compute and combine multi-resolution features for different tasks and different ranges.

The neural network architecture according to various embodiments may be used for a perception system in multi-task and latency sensitive applications, for example autonomous driving. With one unified network, the architecture according to various embodiments may give multiple outputs, for example object detection, semantic segmentation (SemSeg), instance segmentation, or motion prediction, which may be fundamental components for a perception system. As examples, object detection and motion predictions may be used in Automatic Emergency Braking (AEB), semantic/instance segmentation may be used in Automatic Valet Parking (AVP). The architectures according to various embodiments may be computationally efficient, and thus may be suitable for low-end devices, for example embedded chips.

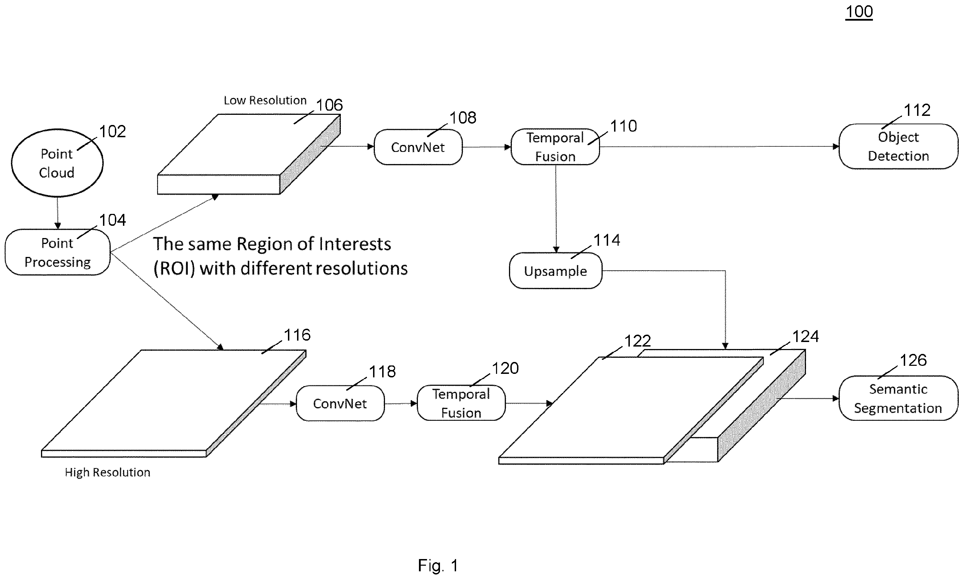

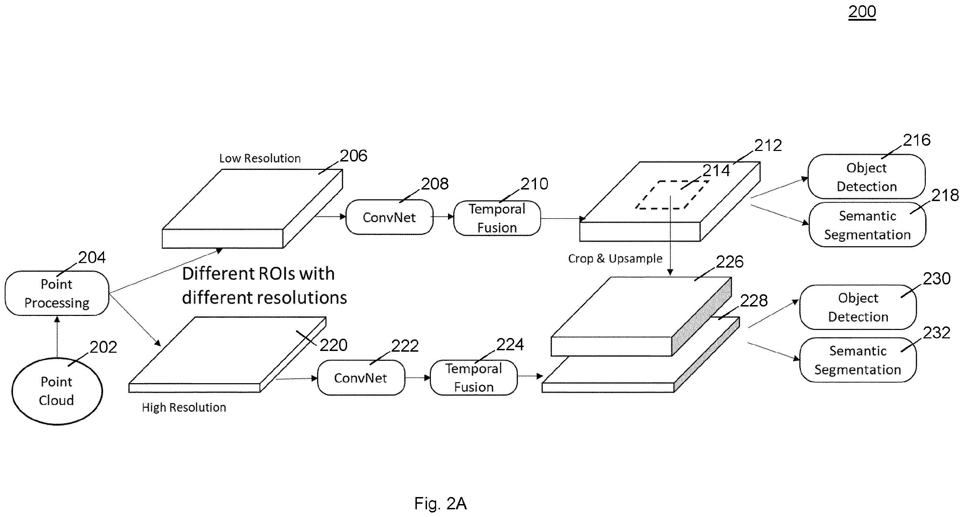

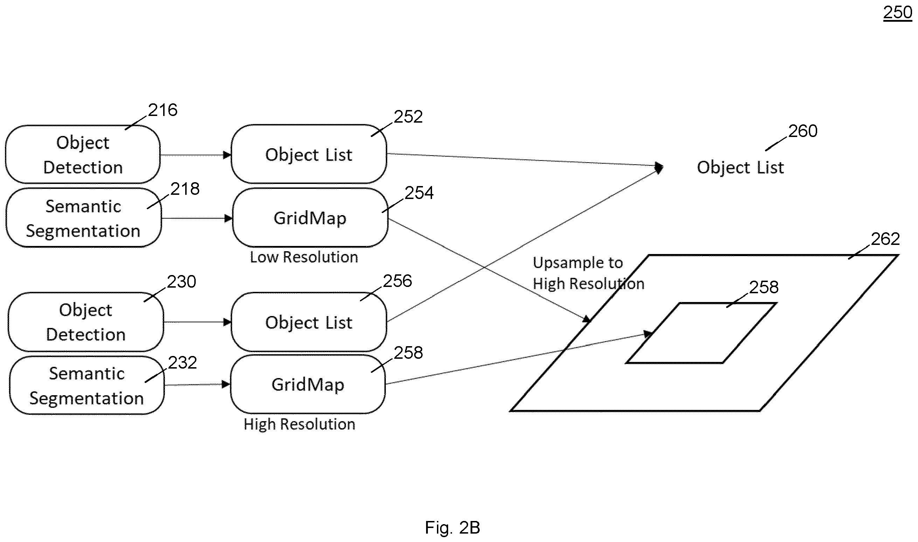

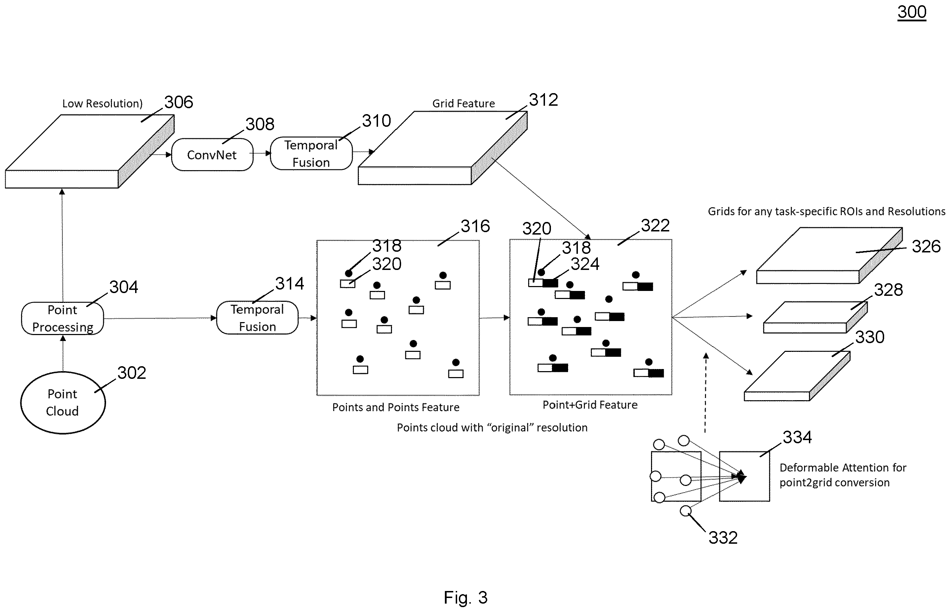

The multi-task and multi-resolution network according to various embodiments may be implemented with different architectures, for example as illustrated in Fig. 1 or as illustrated in Fig. 2 or as illustrated in Fig. 3.

Fig. 1 shows an illustration 100 with a network architecture with task specific resolutions according to various embodiments.

As above mentioned, different tasks may require different spatial resolutions. As illustrated in Fig. 1, object detection 112 and semantic segmentation 126 may be used as example to illustrate a network architecture according to various embodiments which computes multi-resolution features for different tasks and fuses feature of different resolutions.

As illustrated in Fig. 1, input data may be a point cloud 102 (for example from LiDAR or RADAR), which may firstly be processed by a shared network structure (which may be referred to as point processing 104) to get some common point features. This process may be shared by object detection and semantic segmentation, and therefore may avoid waste of computational efforts.

After the common point processing 104, the points may be converted into grids which are more suitable for convolutional network. Two tasks may share the same region of interests (ROI), but may have different grid resolutions (and consequently different grid sizes). Object detection may have a lower resolution (and thus, the grid 106 used for object detection may have a lower resolution), and semantic segmentation may have a higher resolution (and thus, the grid 116 used for semantic segmentation may have a higher resolution). The grids 106 and 116 are illustrated as boxes in Fig. 1, wherein the length and the width of the boxes illustrated the spatial components, wherein the height of the boxes illustrates the feature channels represented in the grids.

As the size of the semantic segmentation grid 116 is much larger than the size of the object detection grid 106, the number of feature channels of the semantic segmentation grid 116 may be reduced to a small value. This may help to reduce the high computation cost of the high resolution grid 116.

The low resolution grid 106 may be processed using a convolutional neural network 108 (which may also be referred to as ConvNet or CNN), followed by temporal fusion 110. Based on the temporally fused data, objection detection 112 may be carried out.

The high resolution grid 116 may be processed using a convolutional neural network 118 (which may also be referred to as ConvNet or CNN), followed by temporal fusion 120. The high resolution features (obtained by temporal fusion 120) may be enhanced by fusing with low resolution features (obtained by temporal fusion 110). For example, low resolution features (obtained by temporal fusion 110) may be upsampled (114) to obtain upsampled features 124, and the upsampled features 124 may be concatenated with high resolution features 122 obtained by temporal fusion 120. Low level features may encode more contextual information, which may be complementary to high resolution features. In other words, the high resolution grid 122 may be boosted by upsampled low resolution feature 124.

Temporal fusion may be performed for different grids separately (separately in temporal fusion 110 and temporal fusion 120) to better accumulate historical information and reduce noise. This step may be especially important for RADAR perception.

As described herein, according to various embodiments, the methods may provide data for multiple tasks. For example, the multi-task network may provide that different tasks may be linked to different resolutions, that a high resolution grid may have less channels to reduce computation cost, and that multiple output grids for Semseg with different resolutions may be fused as one output.

Fig. 2A and Fig. 2B show illustrations 200 and 250 of a network architecture with range specific resolutions according to various embodiments.

As illustrated in Fig. 2A and Fig. 2B, range specific resolution is considered. Fig.2A shows an example with two different ROIs, i.e., far range and near range. As illustrated in Fig. 2A, input data may be a point cloud 202 (for example from LiDAR or RADAR), which may firstly be processed by a shared network structure (which may be referred to as point processing 204) to get some common point features. This process may be shared by further processing for far range and for near range, and therefore may avoid waste of computational efforts.

The far range grid 206 may have a lower resolution than the near range grid 220. As the size of the far range grid 220 is larger than the size of the near range grid 206, the number of feature channels of the far range grid 220 may be reduced to a small value. This may help to reduce the high computation cost of the far range grid 220.

The near range grid 206 may be processed using a convolutional neural network 208 (which may also be referred to as ConvNet or CNN), followed by temporal fusion 210.

The far range grid 220 may be processed using a convolutional neural network 222 (which may also be referred to as ConvNet or CNN), followed by temporal fusion 224.

Low resolution features 212 (obtained by temporal fusion 210) may then be cropped (for example only a subportion 214 of the low resolution features 212 may be used) and upsampled, to obtain cropped and upsampled features 226. The cropped and upsampled features 226 may be fused with high resolution features 228 obtained by temporal fusion 224. Low resolution features 212 and high resolution features 226, 228 may then be used to perform multiple perception tasks, for example object detection and semantic segmentation. For example, low resolution features 212 may be used for low resolution object detection 216 and low resolution semantic segmentation 218. For example, high resolution features 226, 228 may be used for high resolution object detection 230 and high resolution semantic segmentation 232.

It will be understood that there may be no need to link all tasks to every feature. It should be decided based on requirements of perception tasks.

As illustrated in Fig.2A, object detection and semantic segmentation may be linked to both low- and high resolution grids, which means there are multiple outputs for every tasks. Fusion of the outputs is illustrated in Fig. 2B.

For object detection, since the output is in form of object lists 252, 256, the fusion may be concatenating the object list from both resolutions to obtain a final object list 260.

For semantic segmentation, the output grids 254, 258 of different resolution may be fused, for example by upsampling the low resolution grid 254 to obtain an upsampled grid 262, and overlap the upsampled grid 262 with the high resolution grid 258. In the overlapped region, only the high resolution grid 258 may be used.

Fig. 3 shows an illustration 300 of a network architecture with flexible resolutions according to various embodiments. As illustrated in Fig. 3, input data may be a point cloud 302 (for example from LiDAR or RADAR), which may firstly be processed by a shared network structure (which may be referred to as point processing 304) to get some common point features. This process may be shared by further processing for a low resolution grid and for point features.

A low resolution grid 306 may be determined based on the output of the point processing 304. For example, after point processing 304, the points may be converted into the low resolution grid 306, which encodes contextual information with relatively low computation cost.

The low resolution grid 306 may be processed using a convolutional neural network 308 (which may also be referred to as ConvNet or CNN), followed by temporal fusion 310 in order to obtain grid features 312.

The output of the point processing 304 may be used for temporal fusion 314 to obtain a point cloud 316, which may include a plurality of points 318 and corresponding point features 320. It will be understood that since the point cloud 316 does not undergo any discretization into a grid, the point cloud 316 may have the original resolution of the point cloud 302.

The point cloud 316 may be supplemented by grid features 312, to obtain a further point cloud 322, which may include the plurality of points 318 with corresponding point features 320 and corresponding grid features 324. In other words, each point 318 may be supplemented with an addition feature based on the grid features 312. It will be understood that since the point cloud 322 does not undergo any discretization into a grid, the point cloud 322 may have the original resolution of the point cloud 302.

Illustratively, as illustrated in Fig. 3, points are not converted into high resolution grid. Instead, temporal fusion and further feature extraction may be performed on point level, which may keep the original spatial resolution. Afterwards, point feature may be enhanced (or supplemented) by concatenating with low resolution features.

The enhanced points of point cloud 322 may have the original spatial resolution, and may have both contextual and point features integrated. With the enhanced points of point cloud 322, grids with different ROI and spatial resolution may be generated and linked to different tasks. For point to grid conversion (for example from the point cloud 322 to grids 326, 328, 330, wherein each of the grids 326, 328, 330 may have a task-specific ROI and resolution), for example a vanilla method or an attention-based method may be used.

In the vanilla method, points that fall into a grid cell may be merged (for example with mean pooling) to build the feature of this grid cell. In attention-based method, the correspondence between points 332 and grid cells 334 may be learnt by neural network. A weighted sum may then be used to build feature for a grid cell based on its corresponding points. The weights of points may also be learnt by a neural network.

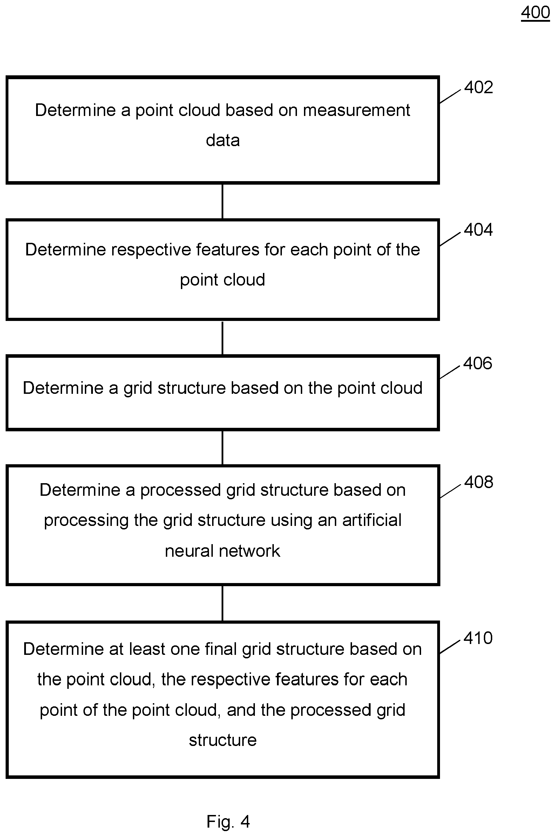

Fig. 4 shows a flow diagram 400 illustrating a method for determining information related to an environment of a vehicle according to various embodiments. In 402, a point cloud may be determined based on measurement data. The point cloud may include or may be a plurality of points. In 404, respective features may be determined for each point of the point cloud. In 406, a grid structure may be determined based on the point cloud. In 408, a processed grid structure may be determined based on processing the grid structure using an artificial neural network. In 410, at least one final grid structure may be determined based on the point cloud, the respective features for each point of the point cloud, and the processed grid structure.

According to various embodiments, the information related to the environment of the vehicle may include or may be first kind of information and second kind of information. According to various embodiments, determining the at least one final grid structure may include or may be determining a first final grid structure and a second final grid structure. According to various embodiments, the first kind of information may be determined based on the first final grid structure. According to various embodiments, the second kind of information may be determined based on the second final grid structure.

According to various embodiments, the first final grid structure may have a resolution different from a resolution of the second final grid structure.

According to various embodiments, the first final grid structure may have a size different from a size of the second final grid structure.

According to various embodiments, the first kind of information may be different from the second kind of information.

According to various embodiments, the first kind of information may include or may be at least one of object detection information or semantic segmentation information. According to various embodiments, the second kind of information may include or may be at least one of object detection information or semantic segmentation information.

According to various embodiments, the measurement data may include or may be at least one of lidar data or radar data.

According to various embodiments, determining the respective features for each point of the point cloud may include or may be temporal fusion.

According to various embodiments, determining the processed grid structure may include or may be temporal fusion.

According to various embodiments, determining the at least one final grid structure may include or may be using a deformable attention for point-to-grid conversion.

According to various embodiments, determining the at least one final grid structure may include or may be supplementing the respective features for each point of the point cloud with features from the processed grid structure and determining the at least one final grid structure based on the respective supplemented features.

Each of the steps 402, 404, 406, 408, 410 and the further steps described above may be performed by computer hardware components.

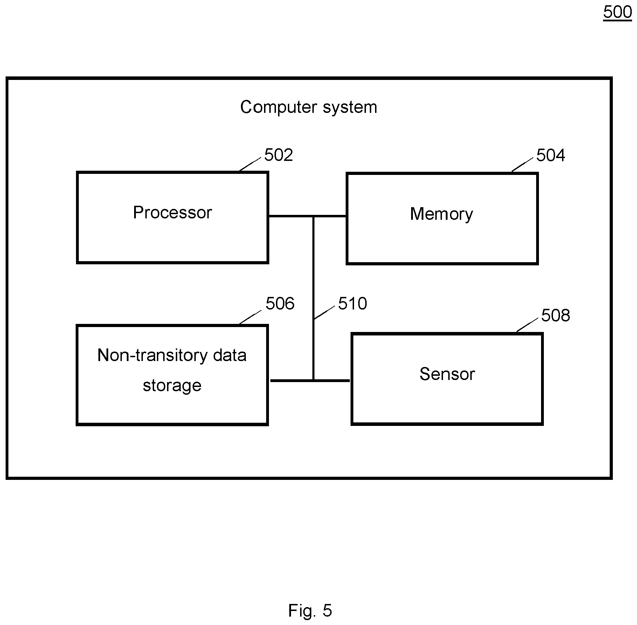

Fig. 5 shows a computer system 500 with a plurality of computer hardware components configured to carry out steps of a computer implemented method for determining information related to an environment of a vehicle according to various embodiments. The computer system 500 may include a processor 502, a memory 504, and a non-transitory data storage 506. A sensor 508 may be provided as part of the computer system 500 (like illustrated in Fig. 5), or may be provided external to the computer system 500.

The processor 502 may carry out instructions provided in the memory 504. The non-transitory data storage 506 may store a computer program, including the instructions that may be transferred to the memory 504 and then executed by the processor 502. The sensor 508 may be used for determining the point cloud as described herein.

The processor 502, the memory 504, and the non-transitory data storage 506 may be coupled with each other, e.g. via an electrical connection 510, such as e.g. a cable or a computer bus or via any other suitable electrical connection to exchange electrical signals. The sensor 508 may be coupled to the computer system 500, for example via an external interface, or may be provided as parts of the computer system (in other words: internal to the computer system, for example coupled via the electrical connection 510).

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the computer system 500.

### Reference numeral list

- 100: illustration with a network architecture with task specific resolutions according to various embodiments
- 102: point cloud
- 104: point processing
- 106: grid used for object detection (low resolution grid)
- 108: convolutional neural network
- 110: temporal fusion
- 112: object detection
- 114: upsampling
- 116: grid used for semantic segmentation (high resolution grid)
- 118: convolutional neural network
- 120: temporal fusion
- 122: processed high resolution grid obtained by temporal fusion 120
- 124: upsampled low resolution grid
- 126: semantic segmentation

- 200: illustration of a network architecture with range specific resolutions according to various embodiments
- 202: point cloud
- 204: point processing
- 206: far range grid (low resolution grid)
- 208: convolutional neural network
- 210: temporal fusion
- 212: low resolution features
- 214: subportion of the low resolution features
- 216: low resolution object detection
- 218: low resolution semantic segmentation
- 220: near range grid (high resolution grid)
- 222: convolutional neural network
- 224: temporal fusion
- 226: high resolution features
- 228: high resolution features
- 230: high resolution object detection
- 232: high resolution semantic segmentation

- 250: illustration of a network architecture with range specific resolutions according to various embodiments
- 252: low resolution object list
- 254: low resolution grid map
- 256: high resolution object list
- 258: high resolution object list
- 260: final object list
- 262: upsampled grid

- 300: an illustration of a network architecture with flexible resolutions according to various embodiments
- 302: point cloud
- 304: point processing
- 306: low resolution grid
- 308: convolutional neural network
- 310: temporal fusion
- 312: grid features
- 314: temporal fusion
- 316: point cloud
- 318: points
- 320: point features
- 322: point cloud
- 324: grid features
- 326: grid for a task-specific ROI and resolution
- 328: grid for a task-specific ROI and resolution
- 330: grid for a task-specific ROI and resolution
- 332: points
- 334: grid cells

- 400: flow diagram illustrating a method for determining information related to an environment of a vehicle according to various embodiments
- 402: step of determining a point cloud based on measurement data, the point cloud comprising a plurality of points
- 404: step of determining respective features for each point of the point cloud
- 406: step of determining a grid structure based on the point cloud
- 408: step of determining a processed grid structure based on processing the grid structure using an artificial neural network
- 410: step of determining at least one final grid structure based on the point cloud, the respective features for each point of the point cloud, and the processed grid structure

- 500: computer system according to various embodiments
- 502: processor
- 504: memory
- 506: non-transitory data storage
- 508: sensor
- 510: connection

## Claims

1. Computer implemented method for determining information related to an environment of a vehicle,
the method comprising the following steps carried out by computer hardware components:
- determining (402) a point cloud based on measurement data, the point cloud comprising a plurality of points;
- determining (404) respective features for each point of the point cloud;
- determining (406) a grid structure based on the point cloud;
- determining (408) a processed grid structure based on processing the grid structure using an artificial neural network; and
- determining (410) at least one final grid structure based on the point cloud, the respective features for each point of the point cloud, and the processed grid structure.

2. The computer implemented method of claim 1,
wherein the information related to the environment of the vehicle comprises first kind of information and second kind of information;
wherein determining (410) the at least one final grid structure comprises determining a first final grid structure and a second final grid structure; wherein the first kind of information is determined based on the first final grid structure; and
wherein the second kind of information is determined based on the second final grid structure.

3. The computer implemented method of claim 2,
wherein the first final grid structure has a resolution different from a resolution of the second final grid structure.

4. The computer implemented method of at least one of claims 2 or 3,
wherein the first final grid structure has a size different from a size of the second final grid structure.

5. The computer implemented method of at least one of claims 2 to 4,
wherein the first kind of information is different from the second kind of information.

6. The computer implemented method of at least one of claims 2 to 5,
wherein the first kind of information comprises at least one of object detection information or semantic segmentation information; and wherein the second kind of information comprises at least one of object detection information or semantic segmentation information.

7. The computer implemented method of at least one of claims 1 to 6,
wherein the measurement data comprises at least one of lidar data or radar data.

8. The computer implemented method of at least one of claims 1 to 7,
wherein determining (404) the respective features for each point of the point cloud comprises temporal fusion.

9. The computer implemented method of at least one of claims 1 to 8,
wherein determining (408) the processed grid structure comprises temporal fusion.

10. The computer implemented method of at least one of claims 1 to 9,
wherein determining (410) the at least one final grid structure comprises using a deformable attention for point-to-grid conversion.

11. The computer implemented method of at least one of claims 1 to 9,
wherein determining (410) the at least one final grid structure comprises supplementing the respective features for each point of the point cloud with features from the processed grid structure and determining the at least one final grid structure based on the respective supplemented features.

12. Computer system (500), the computer system (500) comprising a plurality of computer hardware components configured to carry out steps of the computer implemented method of at least one of claims 1 to 11.

13. Vehicle, comprising the computer system (500) of claim 12.

14. The vehicle of claim 13, further comprising at least one sensor configured to acquire the measurement data.

15. Non-transitory computer readable medium comprising instructions for carrying out the computer implemented method of at least one of claims 1 to 11.
